# EUROPEAN PATENT APPLICATION

(11) **EP 2 704 094 A1**
(43) Date of publication of application: **05.03.2014**
(21) Application number: 13001827.8
(22) Date of filing: 09.04.2013
(51) Int. Cl.: G06T 3/00

(54) **Mobile terminal and method of controlling the same**

(30) Priority: 03.09.2012 KR 20120097123
(71) Applicant: LG Electronics, Inc., Seoul, 150-721 (KR)
(72) Inventor: Lee, Sanghyuck, 153-801 Seoul (KR); Lee, Chulbae, 153-801 Seoul (KR); Byun, Isu, 153-801 Seoul (KR)
(74) Representative: Beyer, Andreas

(57) **Abstract**

Disclosed are a mobile terminal and a method of controlling the same. A mobile terminal includes a display, a first camera configured to perform omnidirectional photographing and a controller configured to convert at least some region of a ringshaped image, captured by the first camera, into a rectangular image and display the rectangular image on the display. In accordance with the present invention, an omnidirectional still or moving image can be captured by an omnidirectional camera embedded in the mobile terminal, and an interface that can be conveniently used by a user can be implemented.

## Description

### CROSS-REFERENCE TO RELATED APPLICATIONS

Pursuant to 35 U.S.C. § 119(a), this application claims the benefit of earlier filing date and right of priority to Korean Patent Application No. 10-2012-0097123, filed on 3 September, 2012, the contents of which are incorporated by reference herein in their entirety.

### TECHNICAL FIELD

The present invention relates to a mobile terminal and a method of controlling the same and, more particularly, to the implementation of an interface through which omnidiretional still or moving images are captured by a the omnidirectional camera embedded in a mobile terminal and which can be conveniently used by a user.

### DISCUSSION OF THE RELATED ART

As functions of terminals such as personal computers, laptop computers, cellular phones diversify, the terminals become multimedia players having multiple functions for capturing pictures or moving images, playing music, moving image files and games and receiving broadcasting programs.

Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions.

To support and enhance the increasing number of functions in a terminal, improving a structural part and/or a software part of the terminal would be desirable.

Recently, as various types of terminals including a mobile terminal are becoming complex and providing various types of functions, the menu structures of the terminals are becoming complicated. Furthermore, a function of displaying various types of digital documents including web pages is added to the mobile terminal. The functions of a camera embedded in the mobile terminal are also diversified. Accordingly, there is a need for the implementation of an interface through which a user can conveniently use image capturing, edition, and so on.

### SUMMARY

The present invention provides a mobile terminal which provides an interface through which omnidiretional still or moving images are captured by a the omnidirectional camera embedded in the mobile terminal and which can be conveniently used by a user and a method of controlling the mobile terminal.

Technical objects to be achieved by the present invention are not limited to the aforementioned object and other technical objects that have not been described above will become evident to those skilled in the art from the following description.

A mobile terminal in accordance with an embodiment of the present invention may include a display, a first camera configured to perform omnidirectional photographing and a controller configured to convert at least some region of a ring-shaped image, captured by the first camera, into a rectangular image and display the rectangular image on the display.

The mobile terminal may further include a second camera configured to perform one-directional photographing, wherein the controller may control at least one of the first camera and the second camera so that the at least one camera operates in any one of a first mode in which the first camera operates and a second mode in which the first and the second cameras operate.

When the at least one camera operates in the second mode, the controller may display an indicator, indicating the location of a region corresponding to a second image captured by the second camera, in a first image captured by the first camera.

The controller may display at least one of the first image and the second image on the display.

The controller may edit at least part of the rectangular image using at least one of enlargement edition, reduction edition, and partition edition methods and display the edited at least part on the display so that the edited at least part corresponding to the region of the display.

The controller may display an indicator indicative of the location of the at least some region of the rectangular image displayed on the display.

The controller may edit the at least part of the rectangular image based on a predetermined criterion or in response to a specific selection signal.

The controller may correct the distortion of objects included in the rectangular image and display corrected objects on the display.

The controller may partition the rectangular image into a plurality of partitioned images and display the plurality of partitioned images on the display.

The rectangular image may include at least one object, and the controller may separate the at least one object from the rectangular image and display the separated at least one object on the display.

A method of controlling a mobile terminal in accordance with another embodiment of the present invention may include performing omnidirectional photographing, converting at least some region of a captured ring-shaped image into a rectangular image, and displaying the rectangular image.

Displaying the rectangular image may include editing at least part of the rectangular image using at least one of enlargement edition, reduction edition, and partition edition methods and displaying the edited at least part.

Displaying the rectangular image may include displaying an indicator indicative of the location of the at least some region of the rectangular image.

Displaying the rectangular image may include correcting the distortion of objects included in the rectangular image and displaying corrected objects.

Displaying the rectangular image may include partitioning the rectangular image into a plurality of partitioned images and displaying the plurality of partitioned images. The rectangular image may include at least one object, and displaying the rectangular image may include separating the at least one object from the rectangular image and displaying the separated at least one object.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
FIG. 1 is a block diagram of a mobile terminal according to an embodiment;
FIG. 2A is a front perspective view of the mobile terminal according to an embodiment;
FIG. 2B is a rear perspective view of the mobile terminal according to an embodiment;
FIGs. 2C and 2D illustrate forms of the mobile terminal and display screens according to various embodiments;
FIG. 3 is a view for explaining a proximity depth of a proximity sensor;
FIG. 4 illustrates a configuration of a CDMA wireless communication system communicating with the mobile terminal shown in FIG. 1;
FIG. 5A is a flowchart illustrating a method of controlling the mobile terminal in accordance with an embodiment of the present invention;
FIG. 5B is a diagram showing an image captured by an omnidirectional camera in accordance with an embodiment of the present invention;
FIG. 6 is a diagram showing an image in which the distortion of objects has been corrected in accordance with an embodiment of the present invention;
FIG. 7 is a diagram showing an image captured by the omnidirectional camera in accordance with an embodiment of the present invention;
FIG. 8 is a diagram showing a display in which an image captured by the omnidirectional camera is displayed in accordance with an embodiment of the present invention;
FIGs. 9 to 11 are diagrams showing an example of the display 151 when the omnidirectional camera and a one-directional camera operate;
FIG. 12 is a diagram showing an example in which the one-directional camera operates while the omnidirectional camera operates;
FIGs. 13 and 14 are diagrams showing an example of the display in which an image is edited and displayed;
FIGs. 15 and 16 are diagrams showing an example in which an indicator indicative of the location of an image displayed in a display is displayed;
FIGs. 17 to 19 are diagrams showing an example in which the location of an image being displayed on the display is changed;
FIG. 20 is a diagram showing an example in which a plurality of partitioned images is displayed on the display;
FIGs. 21 to 23 are diagrams showing an example in which a plurality of partitioned moving images is displayed on the display;
FIG. 24 is a diagram showing an example in which an image is displayed while moving the image on the display;
FIG. 25 is a diagram showing an example of the display in which one region of an image is enlarged and displayed;
FIGs. 26 to 28 are diagrams showing an example in which one region of an image is edited, displayed, and stored;
FIGs. 29 and 30 are diagrams showing an example in which a plurality of partitioned images is displayed;
FIGs. 31 and 32 are diagrams showing an example in which an image is edited based on objects included in the image and an edited image is displayed;
FIG. 33 is a diagram showing an example in which the length and breadth width of an image is adjusted in a specific ratio;
FIGs. 34 and 35 are diagrams showing an example in which objects included in an image is separated from the image and displayed;
FIG. 36 is a plan view showing the structure of the omnidirectional camera; and
FIGs. 37 and 38 are diagrams showing the structure of a camera in accordance with another embodiment of the present invention.

### DETAILED DESCRIPTION

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on. However, those skilled in the art will readily understand that a construction according to an embodiment of the present invention may also be applied to fixed terminals, such as digital TV and a desktop computer, except that the construction is applicable to only a mobile terminal.

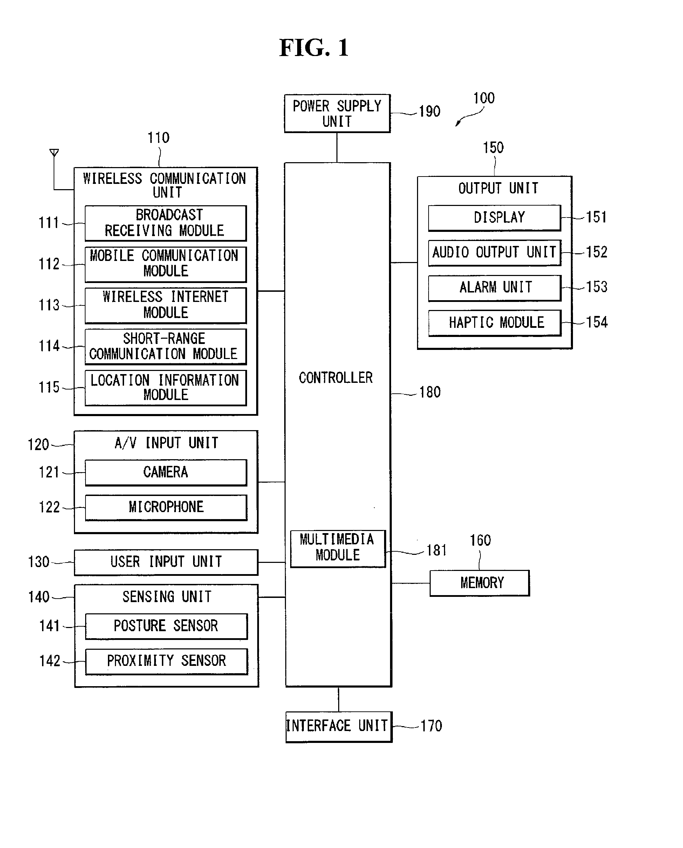

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system. The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through , the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 (of the sensing unit 140) may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identity module (UIM), a subscriber identity module (SIM) and/or a universal subscriber identity module (USIM). An identification device (including the user identification module) may also be manufactured in the form of a smart card. Accordingly, the identification device may be connected to the mobile terminal 100 through a port of the interface 170. The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

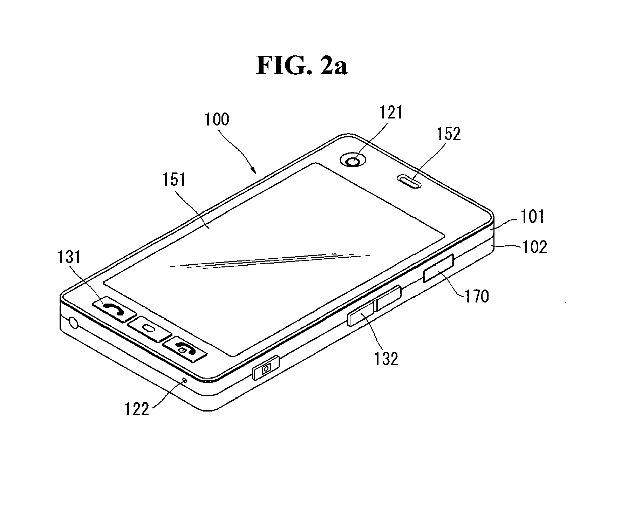

FIG. 2A is a front perspective view of a mobile terminal (or a handheld terminal) according to an embodiment.

The mobile terminal 100 may be a bar type terminal body. However, embodiments are not limited to a bar type terminal and may be applied to terminals of various types including slide type, folder type, swing type and/or swivel type terminals having at least two bodies that are relatively movably combined.

The terminal body may include a casing (or a housing or a cover) that forms an exterior of the mobile terminal 100. In this embodiment, the casing may be divided into a front casing 101 and a rear casing 102. Various electronic components may be arranged in the space formed between the front casing 101 and the rear casing 102. At least one middle casing may be additionally provided between the front casing 101 and the rear casing 102.

The casings may be formed of plastics through injection molding or made of a metal material such as stainless steel (STS) or titanium (Ti).

The display 151, the audio output unit 152, the camera 121, the user input unit 130/131 and 132, the microphone 122 and the interface 170 may be arranged (or provided) in the terminal body, and more specifically may be arranged (or provided) in the front casing 101.

The display 151 may occupy most of the main face of the front casing 101. The audio output unit 152 and the camera 121 may be arranged in a region in proximity to one of both ends of the display 151 and the user input unit 131, and the microphone 122 may be located in a region in proximity to another end of the display 151. The user input unit 132 and the interface 170 may be arranged (or provided) on sides of the front casing 101 and the rear casing 102.

The user input unit 130 may receive commands for controlling operation of the mobile terminal 100, and may include a plurality of operating units 131 and 132. The operating units 131 and 132 may be referred to as manipulating portions and may employ any tactile manner in which a user operates the operating units 131 and 132 while having tactile feeling.

The first and second operating units 131 and 132 may receive various inputs. For example, the first operating unit 131 may receive commands such as start, end and scroll and the second operating unit 132 may receive commands such as control of a volume of sound output from the audio output unit 152 or conversion of the display 151 to a touch recognition mode.

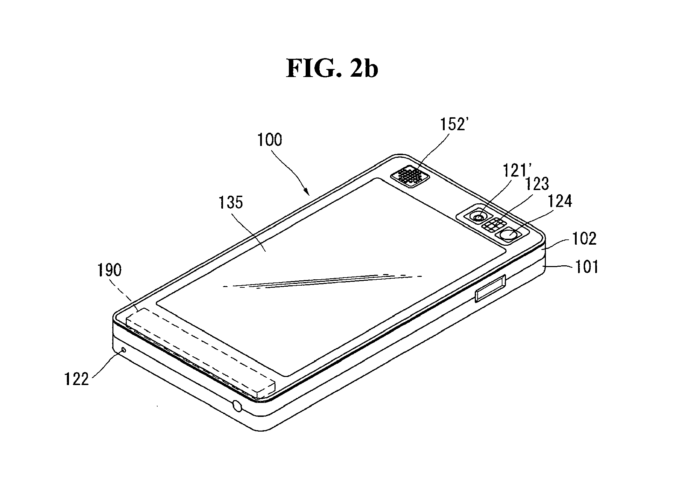

FIG. 2B is a rear perspective view of the mobile terminal (shown in FIG. 2A) according to an embodiment.

Referring to FIG. 2A, a camera 121' may be additionally attached to the rear side of the terminal body (i.e., the rear casing 102). The camera 121' may have a photographing direction opposite to that of the camera 121 (shown in FIG. 2A) and may have pixels different from those of the camera 121 (shown in FIG. 2A).

For example, it may be desirable that the camera 121 has low pixels such that the camera 121 may capture an image of a face of a user and transmit the image to a receiving part in case of video telephony while the camera 121' has high pixels because the camera 121' captures an image of a general object and does not immediately transmit the image in many cases. The cameras 121 and 121' may be attached (or provided) to the terminal body such that the cameras 121 and 121' may rotate or pop-up.

A flash bulb 123 and a mirror 124 may be additionally provided in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 2A) and may be used for a speaker phone mode when the terminal is used for a telephone call.

A broadcasting signal receiving antenna may be additionally attached (or provided) to the side of the terminal body in addition to an antenna for telephone calls. The antenna constructing a part of the broadcasting receiving module 111 (shown in FIG. 1) may be set in the terminal body such that the antenna may be pulled out of the terminal body.

The power supply 190 for providing power to the mobile terminal 100 may be set in the terminal body. The power supply 190 may be included in the terminal body or may be detachably attached to the terminal body.

A touch pad 135 for sensing touch may be attached to the rear casing 102. The touch pad 135 may be of a light transmission type, such as the display 151. In this example, if the display 151 outputs visual information through both sides thereof, the visual information may be recognized (or determined) by the touch pad 135. The information output through both sides of the display 151 may be controlled by the touch pad 135. Otherwise, an additional display may be attached (or provided) to the touch pad 135 such that a touch screen is arranged (or provided) even in the rear casing 102.

The touch pad 135 may operate in connection with the display 151 of the front casing 101. The touch pad 135 may be located in parallel with the display 151 behind the display 151. The touch panel 135 may be identical to or smaller than the display 151 in size.

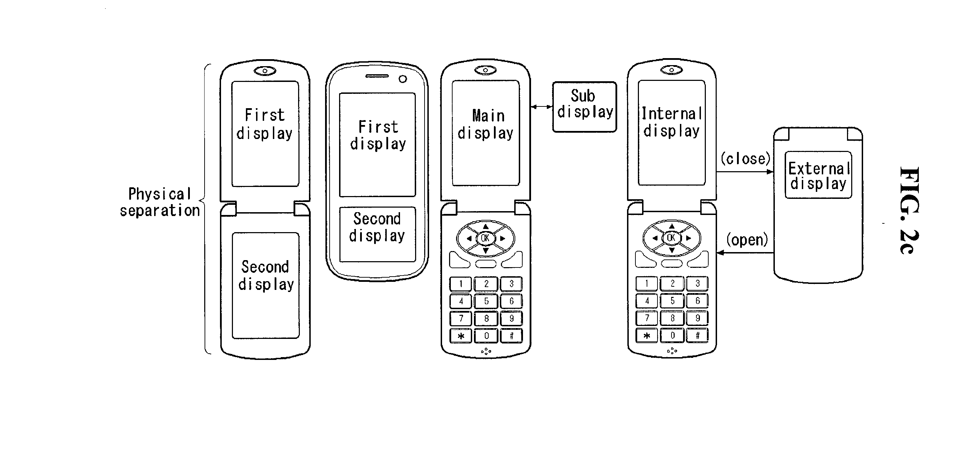

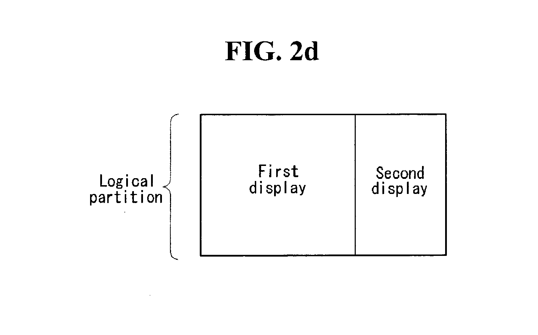

FIGs. 2C and 2D illustrate the mobile terminal 100 and the display 151 according to various embodiments.

Referring to FIG. 2C, the display 151 may include a first display and a second display that are physically separated from each other. In a folder type or slide type mobile terminal having two bodies connected through a hinge or a slide, the first display (or main display) may be formed on the inner face or outer face of one of the bodies, and the second display (or sub display) may be formed on the inner face or outer face of the other body. The sub display may be separated from the mobile terminal and may be detachably combined with the mobile terminal body through an interface to display data from the mobile terminal 100.

The display 151 may include first and second displays that may be logically separated from each other in a display panel, as shown in FIG. 2D.

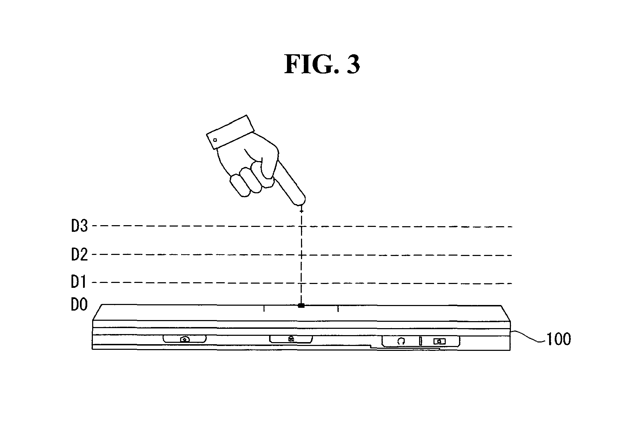

FIG. 3 is a view for explaining a proximity depth of a proximity sensor.

As shown in FIG. 3, when a pointer (such as a user's finger) approaches the touch screen, the proximity sensor located inside or near the touch screen may sense the approach of the pointer, and may output a proximity signal.

The proximity sensor may be constructed such that the proximity sensor outputs a proximity signal according to a distance between the pointer approaching the touch screen and the touch screen (referred to as "proximity depth").

The distance in which the proximity signal is output when the pointer approaches the touch screen may be referred to as a detection distance. The proximity depth may be determined by using a plurality of proximity sensors having different detection distances and by comparing proximity signals respectively output from the proximity sensors.

FIG. 3 shows a section of the touch screen in which proximity sensors capable of sensing three proximity depths may be provided. Proximity sensors capable of sensing less than three or more than four proximity depths may be provided in the touch screen.

More specifically, when the pointer completely contacts the touch screen (D0), it may be recognized as contact touch. When the pointer is located within a distance D1 from the touch screen, it may be recognized as a proximity touch of a first proximity depth. When the pointer is located in a range between the distance D1 and a distance D2 from the touch screen, it may be recognized as a proximity touch of a second proximity depth. When the pointer is located in a range between the distance D2 and a distance D3 from the touch screen, it may be recognized as a proximity touch of a third proximity depth. When the pointer is located greater than the distance D3 from the touch screen, it may be recognized as cancellation of the proximity touch.

Accordingly, the controller 180 may recognize the proximity touch as various input signals according to proximity distance and proximity position of the pointer with respect to the touch screen, and the controller 810 may perform various operation controls according to the input signals.

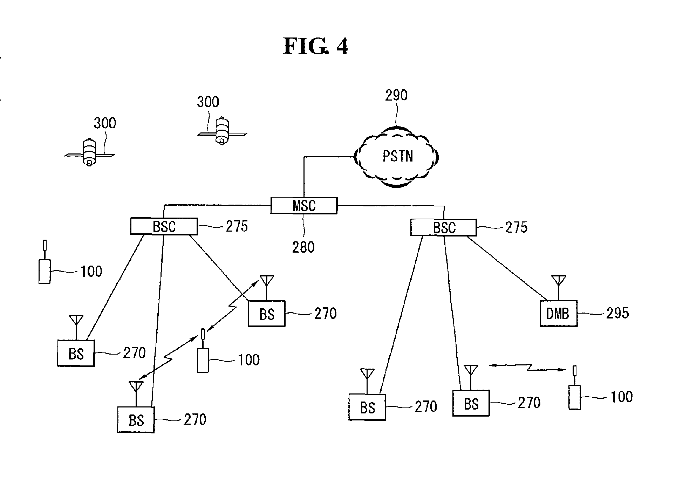

Referring to FIG. 4, a CDMA wireless communication system includes mobile terminals 100, base stations 270, base station controllers 275, and a mobile switching center 280. The mobile switching center 280 is connected to a public switch telephone network (PSTN) 290. The mobile switching center 280 is connected to the base station controllers 275. The base station controllers 275 are connected to the base stations 270 through backhaul lines. The backhaul lines may be constructed according to E1/T1, ATM, IP, PPP, frame relay, HDSL, ADSL or xDSL well-known in the art. The CDMA wireless communication system may include at least two base station controllers 275.

Each base station 270 may include a sector or sectors and each sector may include an omnidirectional antenna or an antenna adjusted to a specific radiation direction from the base station 270. Otherwise, each sector may include two diversity reception antennas. Each base station 270 is constructed to have frequency assignments, and the frequency assignments may have specific spectra (for example, 1.25MHz and 5MHz).

Intersection of sectors and frequency assignments may be referred to a CDMA channel.

The base stations 270 may be referred to as base station transceiver subsystems (BTSs). "Base station" may be used as a term that collectively designates the base station controller 275 and one or more base stations 270 in several examples. Furthermore, the base stations 270 may be referred to as "cell sites". Otherwise, individual sectors of a given base station 270 may be referred to as cell sites.

A terrestrial DMB transmitter 295 can transmit broadcasting signals to the mobile terminals 100 operating in the CDMA wireless communication system. The broadcasting receiving module 111 of each mobile terminal 100 is constructed to receive the broadcasting signals transmitted from the DMB transmitter 295. This can be similarly applied to different types of broadcast and multicast signaling as described above.

FIG. 4 illustrates global positioning system (GPS) satellites 300. These satellites 300 can track the positions of some or all of the mobile terminals 100. Although two satellites are shown in FIG. 4, position information can be obtained from less than or more than two satellites. In addition, other position-tracking techniques (for example, position-tracking techniques that can substitute for GPS technique or can be added to the GPS technique) can be used. If required, some or all of the GPS satellites 300 can support satellite DMB transmission separately or additionally.

When the CDMA wireless communication system operates, the base stations 270 receive reverse link signals from the mobile terminals 100. The mobile terminals 100 may be in a state that the mobile terminals 100 are making calls, sending messages or performing other communications. The reverse link signals received by the base stations 270 are processed by the base stations 270. The processed data is transmitted to the base station controllers 275 connected to the base stations 270. The base station controllers 275 provide call resource allocation and mobility management functionality including soft handoffs between the base stations 270. Furthermore, the base station controllers 275 transmit the received data to the mobile switching center 280. The mobile switching center 280 provides additional routing services for interfacing with the PSTN 290. Similarly, the PSTN 290 interfaces with the mobile switching center 280, and the mobile switching center 280 interfaces with the base station controllers 275. The base station controllers 275 control the base stations 270 to transmit forward link signals to the mobile terminals 100.

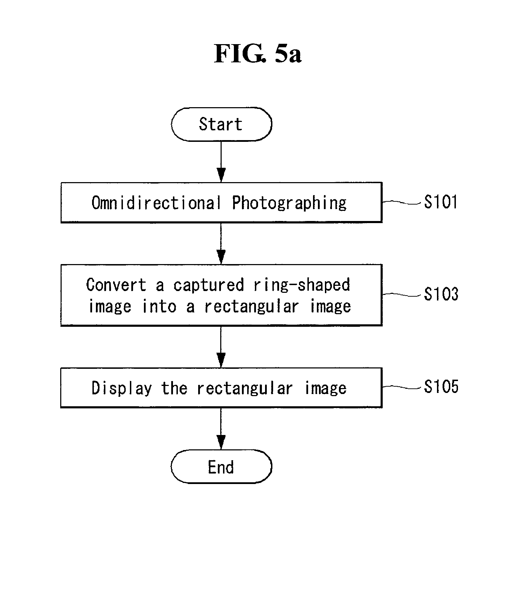

FIG. 5A is a flowchart illustrating a method of controlling the mobile terminal in accordance with an embodiment of the present invention.

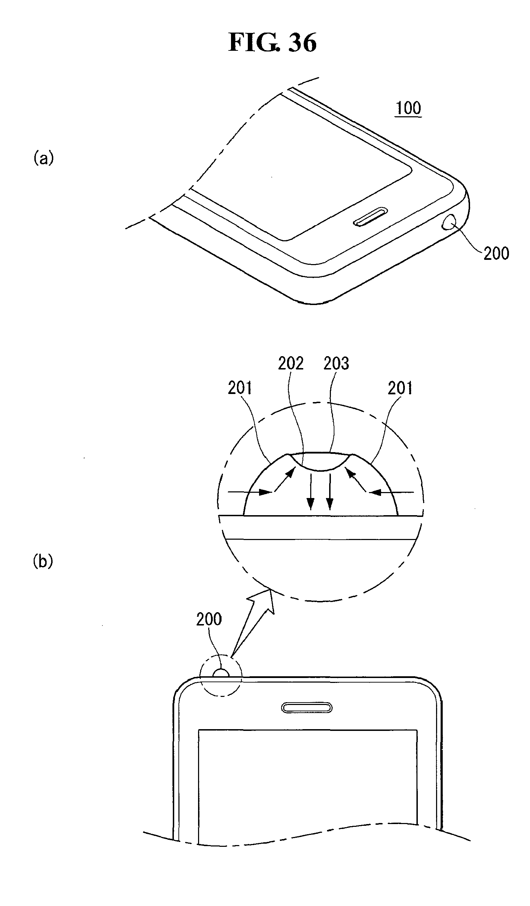

As shown in FIG. 5A, the mobile terminal 100 in accordance with an embodiment of the present invention can convert at least one selection region of a ring-shaped image, captured by a first camera 200 (see FIG. 36) for performing omnidirectional photographing, into a rectangular image and display the rectangular image on the display 151.

The first camera (i.e., a small-sized omnidirectional camera) 200 embedded in the mobile terminal 100 can perform 360-degree (i.e., omnidirectional) photographing at step S101.

The mobile terminal 100 can include the omnidirectional camera 200 on one side thereof. The lens of the omnidirectional camera 200 can capture an image through a field of view of 360 degrees. That is, the lens of the omnidirectional camera 200 can be a spherical lens.

The rear camera 121' can be provided in the rear of the mobile terminal 100. The rear camera 121' can perform one-directional photographing. That is, the lens of the rear camera 121' can capture an image through a field of view of approximately 65 degrees.

The omnidirectional camera 200 and the rear camera (i.e., one-directional camera) 121' can operate at the same time. The photographing screen of the omnidirectional camera and the photographing screen of the one-directional camera can be displayed in a display. A photographing direction of the omnidirectional camera 200 may be identical with that of the one-directional camera 121'.

The controller 180 can display an indicator indicative of a standard direction for photographing. The controller 180 can control a standard direction for photographing.

In response to a specific event generated while the omnidirectional camera 200 operates, the controller 180 can operate the one-directional camera 121'.

While the one-directional camera 121' operates, the controller 180 can automatically store an image having a field of view of 360 degrees through the omnidirectional camera 200. The controller 180 can display the photographing screen of the omnidirectional camera 200 on the display 151.

The controller 180 can convert a captured ring-shaped image into a rectangular image at step S103.

An image captured by the omnidirectional camera 200 is a ring-shaped image. That is, the controller 180 can obtain a ring-shaped image having a doughnut shape. The controller 180 can convert the captured ring-shaped image into the rectangular image. That is, the controller 180 can convert the captured ring-shaped image having a doughnut shape into a form in which the ring-shaped image is spread on the basis of one region of the ring-shaped image, that is, a rectangular image.

The controller 180 can display the rectangular image on the display 151 at step S105.

The controller 180 can correct the distortion of objects included in the rectangular image and display a corrected image. The controller 180 can perform edition on part of the rectangular image, such as enlargement, reduction, and partitioning, and display an edited image.

The controller 180 can display an image having a field of view of 360 degrees on the display 151 in a drum form. That is, the controller 180 can display a 360-degree captured image so that it is intuitively recognized.

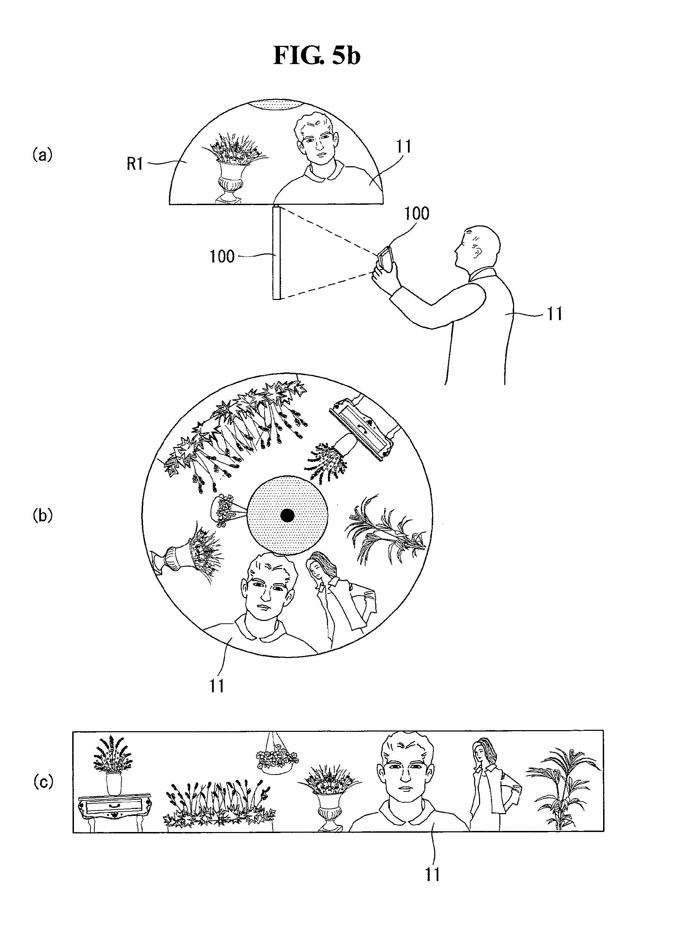

FIG. 5B is a diagram showing an image captured by the omnidirectional camera 200 in accordance with an embodiment of the present invention.

As shown FIG. 5B, the mobile terminal 100 including the omnidirectional camera 200 in accordance with an embodiment of the present invention can capture an image having a field of view of 360 degrees around the mobile terminal.

As shown in (a) of FIG. 5B, the controller 180 can capture an image having a field of view of 360 degrees around the mobile terminal 100. R1 is illustrated as being an image captured by the lens of the omnidirectional camera in order to help intuitive understanding.

As shown in (b) of FIG. 5B, an image captured by the omnidirectional camera can be a ring-shaped image. The ring-shaped image captured by the omnidirectional camera may be partially distorted as compared with an image actually recognized through a field of view. That is, it means that an image captured by a spherical lens may be distorted when the image is displayed on a plane.

An image of a user 11 located at a relatively close distance from the mobile terminal 100 may occupy a relatively larger portion than other objects included in the ring-shaped image.

As shown in (c) of FIG. 5B, the ring-shaped image can be converted into a rectangular image and displayed on the display 151. That is, the controller 180 can convert the ring-shaped image having a doughnut shape into the rectangular image by spreading the ring-shaped image on the basis of any one portion thereof.

The rectangular image can include a 360-degree image around the mobile terminal 100. That is, scenes corresponding to the locations of 90 degrees, 180 degrees, and 270 degrees at specific intervals on the basis of one end (0 degree) of the rectangular image can be seen.

When an image is captured by the omnidirectional camera 200, an omnidirectional still or moving image can be captured. That is, if it is sought to capture an image around a specific target, the mobile terminal 100 does not change its photographing direction although the specific target moves.

Furthermore, the mobile terminal 100 can capture an image, including a specific target, and surrounding situations. That is, the mobile terminal 100 can obtain pieces of information about temperature, humidity, and locations, including a visual image that can be captured by the lens of the omnidirectional camera. For example, the mobile terminal 100 can store temperature, humidity, etc. obtained by sensors included in the mobile terminal along with a captured visual image. Furthermore, the mobile terminal 100 can obtain information about a location using a GPS (the location information module 115 of FIG. 1) and store the obtained information.

When photographing is performed by a camera capable of one-directional photographing in the form of a panorama shot, a missing part may occur between a first shot and a second shot. In accordance with an embodiment of the present invention, when photographing is performed by the omnidirectional camera 200, omnidirectional and simultaneous photographing can be performed even without switching the direction of the mobile terminal 100.

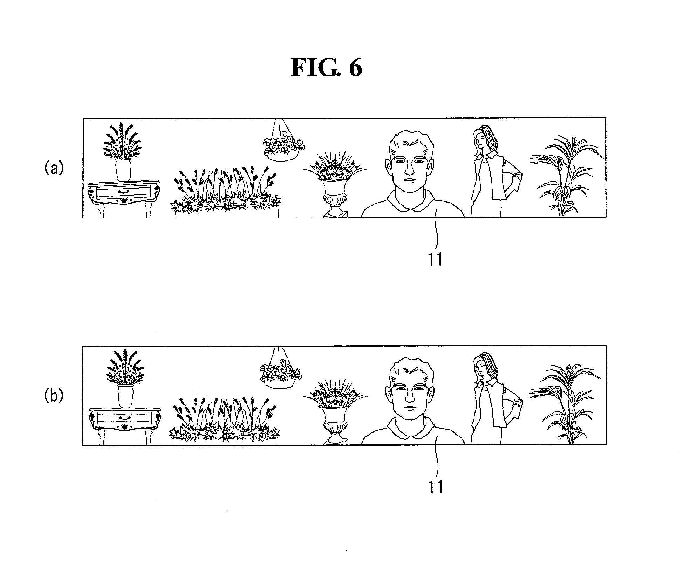

FIG. 6 is a diagram showing an image in which the distortion of objects has been corrected in accordance with an embodiment of the present invention.

As shown FIG. 6, an image captured by the omnidirectional camera 200 may include distorted objects.

FIG. 6(a) is a diagram showing a rectangular image including distorted objects. That is, an image captured by a spherical lens may be distorted when the image is displayed on a plane.

As shown in FIG. 6(b), the controller 180 can correct the distorted objects included in the rectangular image and display an image including the corrected objects so that the image including the corrected objects is close to an image that is actually recognized by a user through a field of view.

The controller 180 can control the degree of correction for a captured image by applying a specific correction algorithm to the captured image. That is, the controller 180 can mitigate the degree of the distortion of objects and display an image having the mitigated degree of distortion. Furthermore, the controller 180 can deepen the degree of the distortion of objects and display an image having the deepened degree of distortion. Furthermore, the controller 180 can display a captured image as it is without applying a correction algorithm to the captured image.

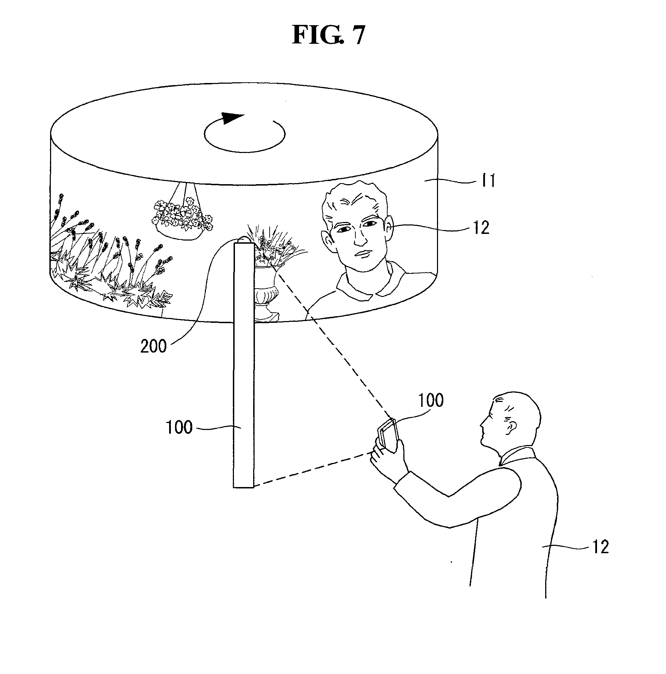

FIG. 7 is a diagram showing an image captured by the omnidirectional camera 200 in accordance with an embodiment of the present invention.

As shown in FIG. 7, a user 12 can perform 360-degree photographing around the mobile terminal 100.

I1 is an image captured by the omnidirectional camera 200 and displayed in a cylindrical form so that the image can be intuitively recognized. I1 can include a shape of the user 12 located in a self-shot direction.

A 360-degree image captured by the omnidirectional camera 200 is hereinafter illustrated in a cylindrical form so that the 360-degree image can be intuitively recognized. Furthermore, in order to help understanding, objects included in an image displayed in a cylindrical form have been corrected, and thus the image can be displayed so that it is close to an image actually recognized through a field of view.

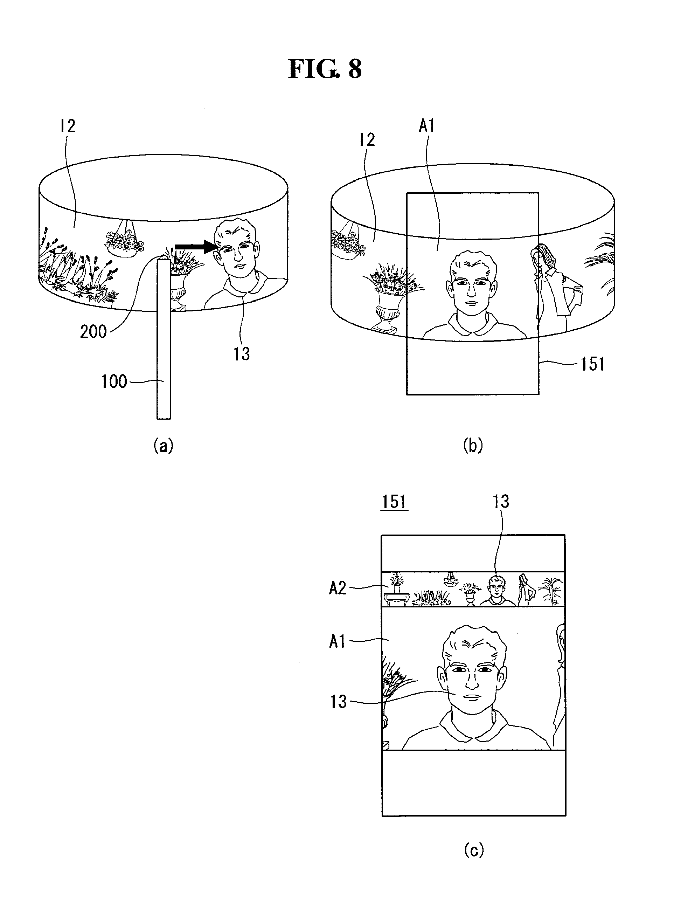

FIG. 8 is a diagram showing the display 151 in which an image captured by the omnidirectional camera 200 is displayed in accordance with an embodiment of the present invention.

As shown in FIG. 8(a), the omnidirectional camera 200 can capture an omnidirectional image I2 around the mobile terminal 100. When the omnidirectional image I2 is captured, the controller 180 may use a specific direction in the omnidirectional image, for example, an arrow direction indicated in the omnidirectional image I2 as a standard.

The controller 180 can convert at least one region of a ring-shaped image, captured by the omnidirectional camera 201, into a rectangular image and display the rectangular image on the display 151.

As shown in FIG. 8(b), the controller 180 can display an image corresponding to a specific direction in the captured image I2, that is, an image corresponding to a standard direction, on the display 151. That is, one region A1 of the entire image I2, that is, a 360-degree image, can be displayed on the display 151. For example, if an image is captured based on the arrow direction of FIG. 8(a), the controller 180 can display a portion of the captured image, including a user 13, on the display 151 by default.

As shown in FIG. 8(c), the controller 180 can enlarge the one region A1 corresponding to the standard direction, in the entire image A2, and display an image including the enlarged region A1. Furthermore, the controller 180 can display the entire 360-degree image A2 on the display 151.

The controller 180 can convert a ring-shaped image, captured by the omnidirectional camera 200, into a rectangular image and display the rectangular image on the display 151. The controller 180 may store the ring-shaped image in the memory 160, convert the stored ring-shaped image into the rectangular image, and display the converted ring-shaped image on the display 151. In one embodiment, before storing the ring-shaped image, the controller 180 may convert the ring-shaped image into the rectangular image and display the converted rectangular image on the display 151. A user can intuitively check an omnidirectional image on the display 151 simultaneously with the capturing of the omnidirectional image.

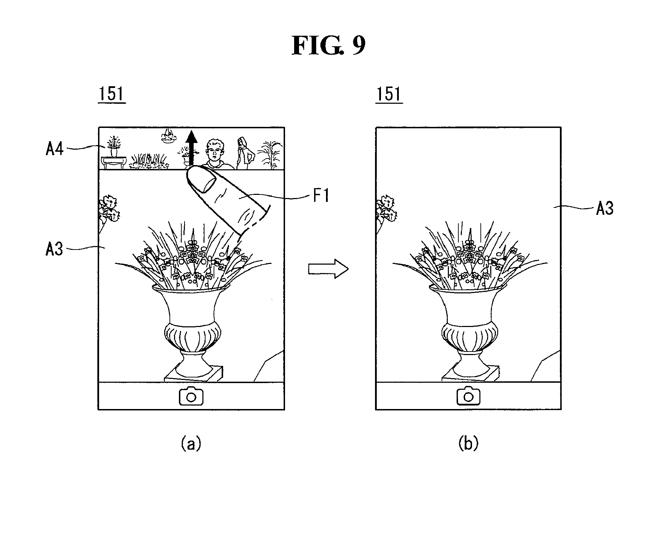

FIGs. 9 to 11 are diagrams showing an example of the display 151 when the omnidirectional camera and the one-directional camera operate.

The mobile terminal 100 can include the first camera 200 for performing omnidirectional photographing and a second camera for performing photographing in a specific direction. The controller 180 can control at least one of the first camera and the second camera so that the mobile terminal 100 operates in any one of a first mode in which the first camera operates and a second mode in which both the first camera and the second camera operate.

As shown in FIG. 9(a), the controller 180 can display an image A4 capable of being captured by the first camera 200 and an image A3 capable of being captured by the second camera on the display 151.

In an embodiment, the controller 180 can perform control so that the image A3 occupies the entire display 151 in response to a signal generated by upward dragging the image A3 through a finger F1 or the like, such as touch & drag. As a result, as shown in FIG. 9(b), only the image A3 capable of being captured by the second camera can be displayed on the display 151. That is, the controller 180 can drive the second camera only.

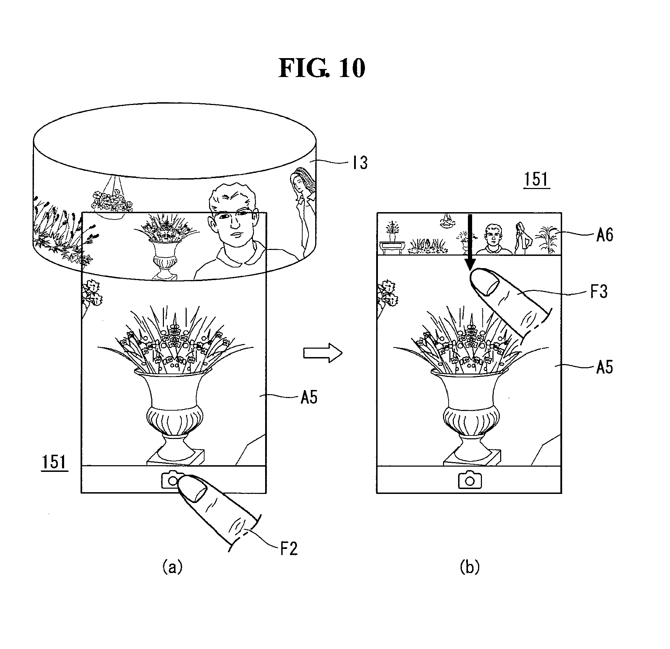

FIG. 10(a) is a diagram showing the display 151 in which the second camera for performing photographing in a specific direction operates. The second camera for performing photographing in a specific direction can be a camera capable of photographing within a range of a field of view of, for example, 65 degrees around the lens of the second camera. The controller 180 can display an image having a field of view of 65 degrees on the display 151.

At this time, the controller 180 can also drive the first camera 200 for performing omnidirectional photographing. As shown in FIG. 10(b), the controller 180 can display a captured 360-degree image in response to a signal generated by downward dragging the upper end of the display 151 through a finger F3 or the like.

While driving the second camera, the controller 180 can store surrounding situations automatically. The surrounding situations can include an image capable of being captured by the omnidirectional camera and pieces of information about temperature, humidity, and a location.

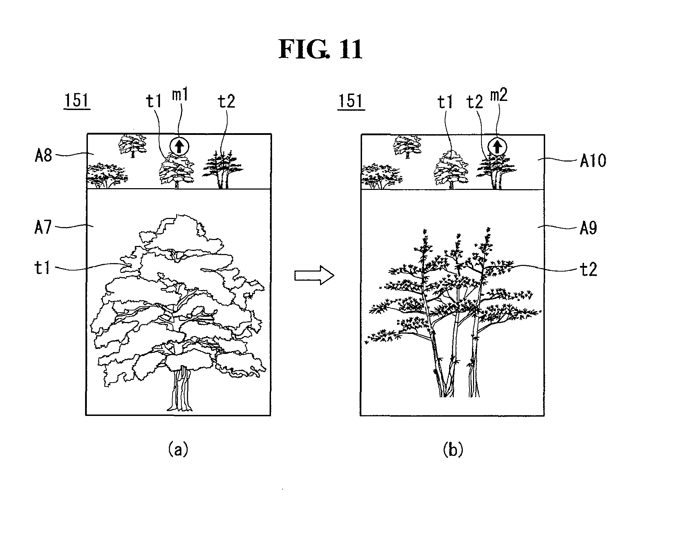

As shown in FIG. 11(a), the first camera and the second camera can operate at the same time. The controller 180 can display a first image A8 capable of being captured by the first camera on the display 151. The controller 180 can display a second image A7 capable of being captured by the second camera on the display 151.

The controller 180 can display an indicator m1, indicating the location of a region corresponding to the second image A7 captured by the second camera, in the first image A8 captured by the first camera. For example, as shown in FIG. 11(a), the controller 180 can display the indicator m1 at the location of a region corresponding to a region in which t1 captured by the second camera is located.

As shown in FIG. 11(b), when t2 is captured by the second camera, the controller 180 can display an indicator m2 at a location of a first image A10 corresponding to a second image A9, that is, a location where t2 is placed.

A user can change a photographing direction of the second camera along portions to be photographed by the second camera while checking the images A8 and A10 captured by the first camera. A user can intuitively recognize a portion now being photographed by the second camera by moving the indicator m2.

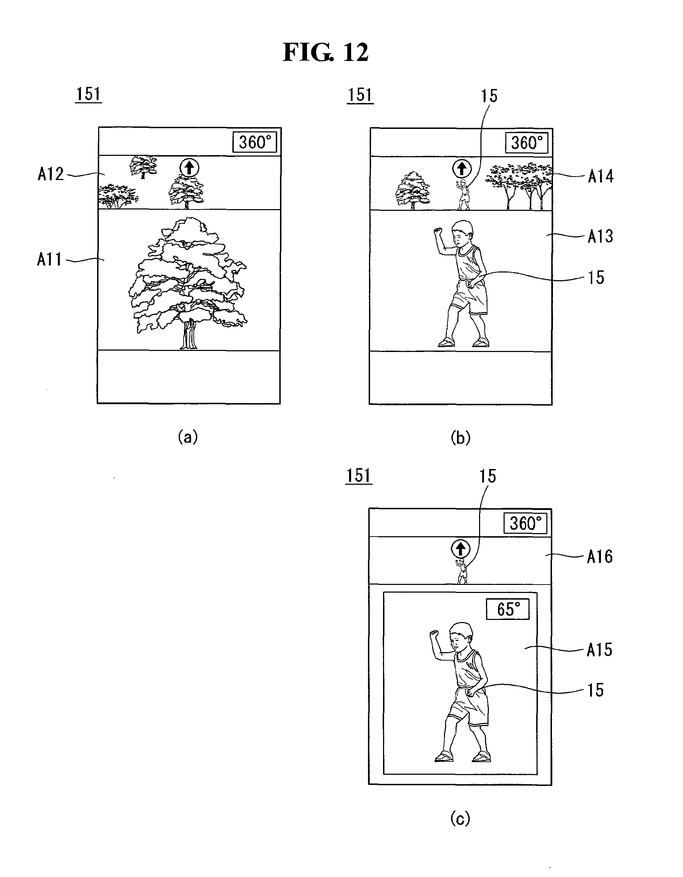

FIG. 12 is a diagram showing an example in which the one-directional camera operates while the omnidirectional camera operates.

As shown in FIG. 12, when a person, from among objects included in an image, is captured while the omnidirectional camera (i.e., the first camera) operates, the controller 180 can drive the one-directional camera (i.e., the second camera).

As shown in FIG. 12(a), the controller 180 can display an image A12 captured by the omnidirectional camera (i.e., the first camera). The controller 180 can enlarge a portion of the image A12 corresponding to a standard direction and display the enlarged portion A11 on the display 151.

As shown in FIG. 12(b), while a still or moving image is captured, the controller 180 can capture a person 15 from among objects included in the image (A13 and A14)

At this time, the controller 180 can drive the one-directional camera (i.e., the second camera) capable of image capturing having high-picture quality. The controller 180 can drive the second camera and display an image A15 captured by the second camera on the display 151.

FIG. 12 illustrates an example in which a camera is driven when a person is captured while the camera captures an image. In some embodiments, the controller 180 may drive the camera in response to a predetermined event.

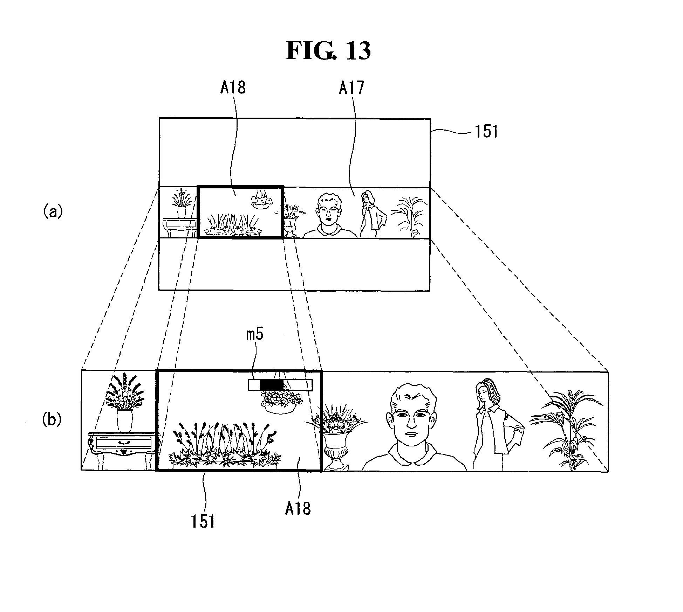

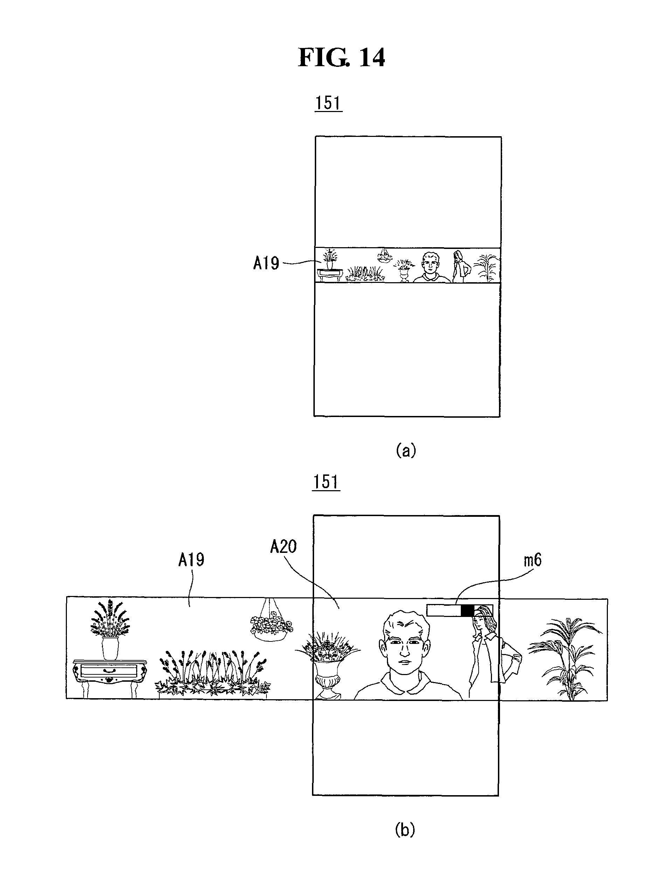

FIGs. 13 and 14 are diagrams showing an example of the display 151 in which an image is edited and displayed.

The controller 180 can edit at least part of a rectangular image so that the at least part corresponds to a display region of the display 151 by using at least one of enlargement edition, reduction edition, and partition edition methods.

As shown in FIG. 13, the controller 180 can enlarge one region A18 of a captured image A17 and display the enlarged region A1 on the display 151.

The controller 180 can display an indicator indicating the location of at least some region of a rectangular image that is being displayed on the display 180. That is, the controller 180 can display an indicator m5 indicating the location of a portion that is being displayed on the display 151, as shown in FIG. 13(b).

FIG. 13 is a diagram showing an example in which the mobile terminal 100 is horizontally placed, and FIG. 14 is a diagram showing an example in which the mobile terminal 100 is vertically placed. As shown in FIG. 14, the controller 180 can enlarge some region A20 of the entire image A19 and display the enlarged region A20 on the display 151.

The controller 180 can display an indicator m6 indicating that a portion now being displayed on the display 151 corresponds to what region of the entire image A19 so that a user can intuitively recognize the displayed portion.

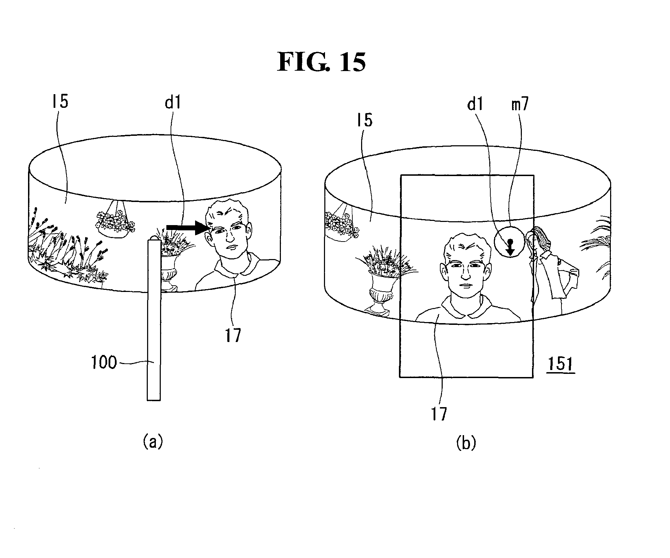

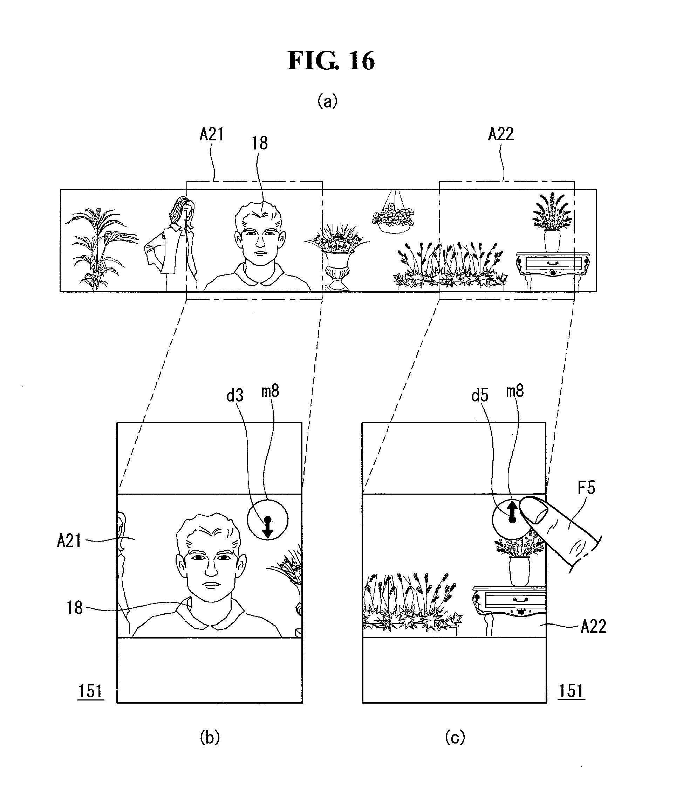

FIGs. 15 and 16 are diagrams showing an example in which an indicator indicative of the location of an image being displayed on the display 151 is displayed.

As shown in FIG. 15(a), the controller 180 can perform photographing based on a user direction d1, that is, a self-shot direction d1. That is, the controller 180 can capture a 360-degree image I5 based on the d1 direction through the omnidirectional camera (i.e., the first camera).

As shown in FIG. 15(b), the controller 180 can display some region of the entire image I5, that is, a region corresponding to the standard direction d1 on the display 151. The controller 180 can display an indicator m7 so that a user can intuitively recognize the direction of an image being displayed on the display 151. For example, the controller 180 can display a downward arrow within a circular indicator m7 so that a user can intuitively recognize that a self-shot direction is a standard direction.

The indicator can be displayed in various forms, such as a circle, a bar (-) shape, a compass shape, a direction indication (4 shape, and a drum shape.

As shown in FIG. 16, the controller 180 can display some regions A21 and A22 of the entire image on the display 151.

FIG. 16(b) shows an example in which the controller 180 displays the region A21 on the display 151. The controller 180 can indicate an indicator m8 on the display 151 so that a user can intuitively recognize the direction of the region A21 of the entire image. For example, the controller 180 can display a downward arrow d3 within a circular indicator m8 so that a user can intuitively recognize an image in a self-shot direction.

As shown in FIG. 16(c), the controller 180 can display an image A22 in the other direction in response to a signal generated by a touch input to one direction of the circular indicator m8 through a finger F5 or the like. That is, when an input signal to an upward direction d5 within the circular indicator m8 is received, the controller 180 can display the image A22 in the front direction of the mobile terminal 100, that is, a direction opposite to the self-shot direction, on the display 151.

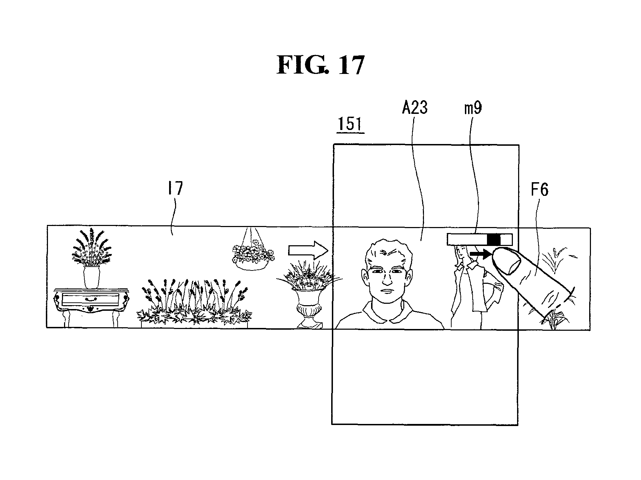

FIGs. 17 to 19 are diagrams showing an example in which the location of an image being displayed on the display 151 is changed.

As shown in FIG. 17, the controller 180 of the mobile terminal 100 in accordance with an embodiment of the present invention can display part of a captured omnidirectional image I7 on the display 151.

The controller 180 can display an indicator m9 indicating the location of a region that is being displayed on the display 151. The controller 180 can change the location of an image being displayed on the display 151, in response to a signal generated by touching the location indication bar of the indicator m9 through a finger F6 or the like. That is, the controller 180 can move the location of the image I7, being displayed on the display 151, left and right in response to a movement of the location indication bar of the indicator m9 having a straight-line shape.

Accordingly, a user can intuitively check the location of a portion of the entire image I7 being displayed on the display 151, through the indicator m9.

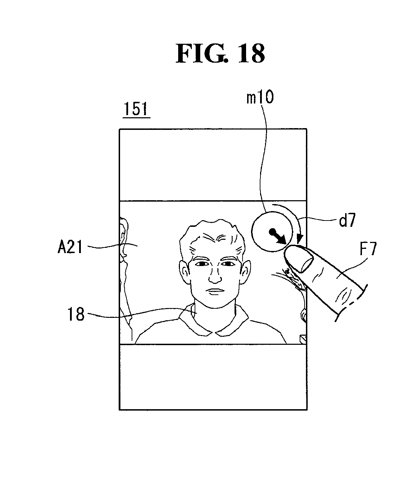

As shown in FIG. 18, in another embodiment, the controller 180 can move the location of an image being displayed on the display 151 in response to a signal that moves a circular indicator m10 in a clockwise direction d7 through a finger F7 or the like. Furthermore, in response to a signal that moves the circular indicator m10 in a counterclockwise direction through a finger or the like, the controller 180 can move the location of an image being displayed on the display 151.

In yet another embodiment, the controller 180 can move the location of an image being displayed on the display 151, in response to a signal, such as a touch & drag signal, for an image being displayed on the display 151 through a finger or the like.

In yet another embodiment, the controller 180 can move the location of an image being displayed on the display 151 in response to an input signal generated through an additional button provided in one region of the display 151 or a button provided outside the mobile terminal 100.

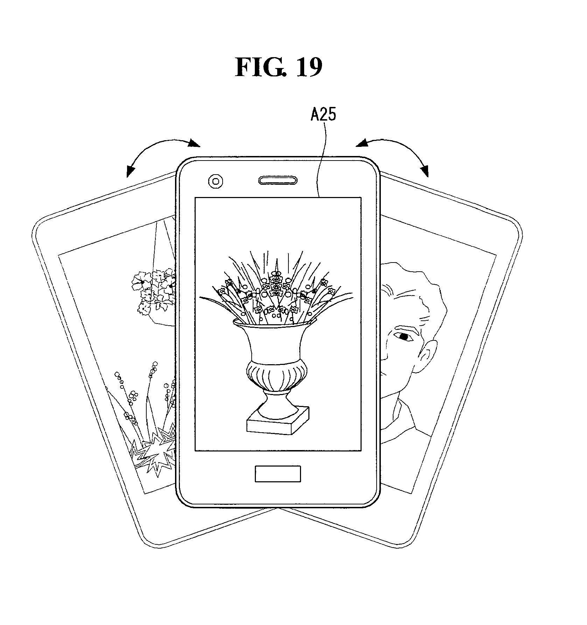

In yet another embodiment, the mobile terminal 100 can change the location of an image being displayed on the display 151 in response to a signal that moves the mobile terminal 100 left and right, as shown in FIG. 19. That is, a displayed image A25 can be moved in response to a movement of the mobile terminal 100.

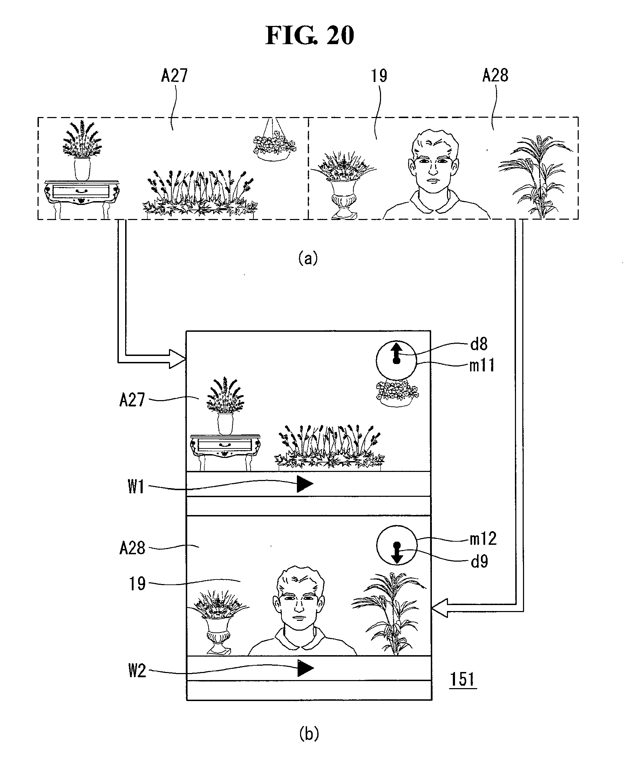

FIG. 20 is a diagram showing an example in which a plurality of partitioned images is displayed on the display 151.

As shown in FIG. 20, the controller 180 of the mobile terminal 100 in accordance with an embodiment of the present invention can partition an omnidirectional image into a plurality of images and display the plurality of partitioned images on the display 151 at the same time.

For example, the controller 180 can partition an image into two images on the basis of 180 degrees. For example, the controller 180 can partition the display 151 into two regions A27 and A28. The controller 180 can display the two partitioned images in the two regions, respectively, at the same time. Accordingly, if an image is a moving image, a user can view another image in another direction in the same time zone at the same time.

The controller 180 can display images in different directions in the partitioned regions A27 and A28. The controller 180 can display indicators m11 and m12, indicating the directions of the respective partitioned images, in the respective regions A27 and A28. A direction d8 indicated by the indicator m11 displayed in the region A27 is a front direction seen by a user, and a direction d9 indicated by an indicator m12 displayed in the region A28 is the self-shot direction of a user.

If an image is a moving image, the controller 180 can obtain signals, such as play and a stop, through play buttons w1 and w2.

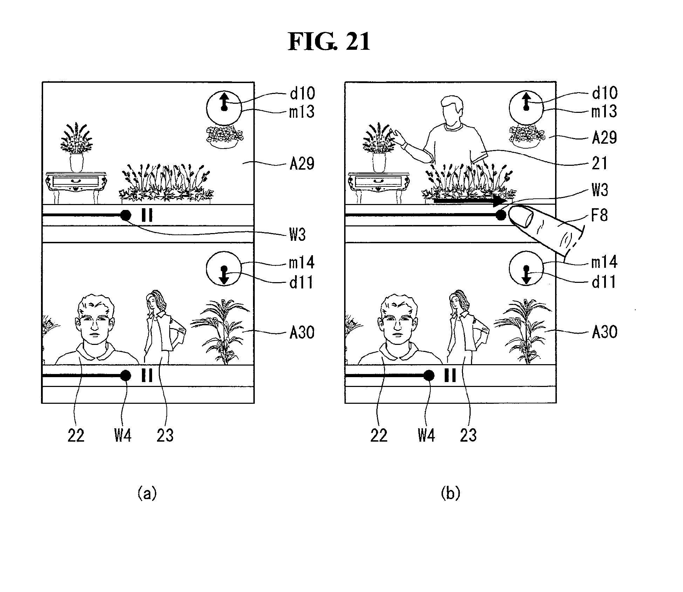

FIGs. 21 to 23 are diagrams showing an example in which a plurality of partitioned moving images is displayed on the display 151.

As shown, the controller 180 of the mobile terminal 100 in accordance with an embodiment of the present invention can play and stop a plurality of partitioned moving images.

As shown in FIG. 21(a), the controller 180 can display an image in a direction d10 in a region A29 and an image in a direction d11 in a region A30. If an image is a moving image, the controller 180 can play images in different directions at the same time. Play bars w3 and w4 can indicate locations of the entire moving images that are now being played.

As shown in FIG. 21(b), the controller 180 can change a play location in response to an input signal received through the play bar w3. That is, the controller 180 can change a play location of the image in the region A29 in the state in which the image in the region A30 has been stopped.

Accordingly, a user can play a moving image in a desired direction, of the entire image. Furthermore, a user can change a time zone according to a desired time zone and play a moving image in the desired time zone.

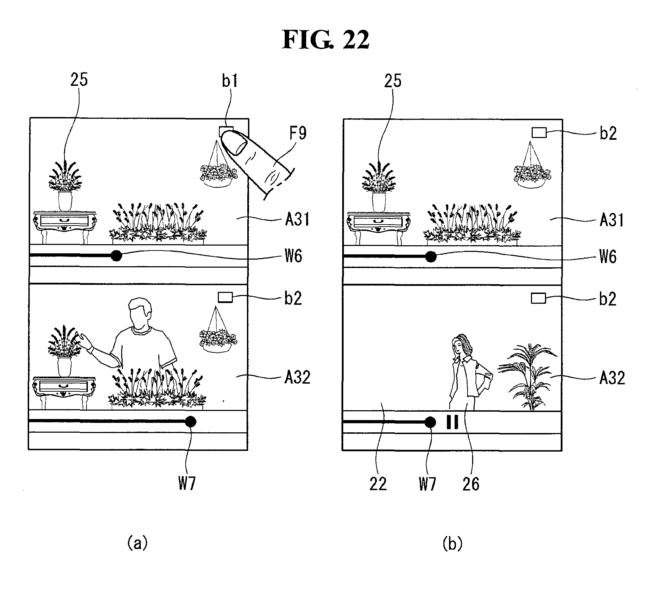

As shown in FIG. 22, the controller 180 of the mobile terminal 100 in accordance with an embodiment of the present invention can synchronize moving images in different directions in the same time zone when playing the moving images.

As shown in FIG. 22(a), the controller 180 can play moving images having different time zones in respective partitioned regions A31 and A32. Play bars w6 and w7 indicate locations that are being played, of the entire moving images.

The controller 180 can make a play location of the region A32 identical with a play location of the region A31 in response to a signal generated by touching a synchronization button b1 displayed in the region A31 through a finger F9 or the like.

In another embodiment, the controller 180 can make a play location of the region A32 identical with a play location of the region A31 in response to a signal generated by touching a synchronization button b2 displayed in the region A32 through a finger or the like.

FIG. 22(b) is a diagram showing an example in which the time zone of a play location of the region A32 has been synchronized with the time zone of a play location of the region A31.

As shown, when moving images in different directions are played at the same time, the controller 180 can synchronize the moving images on the basis of an image in any one direction.

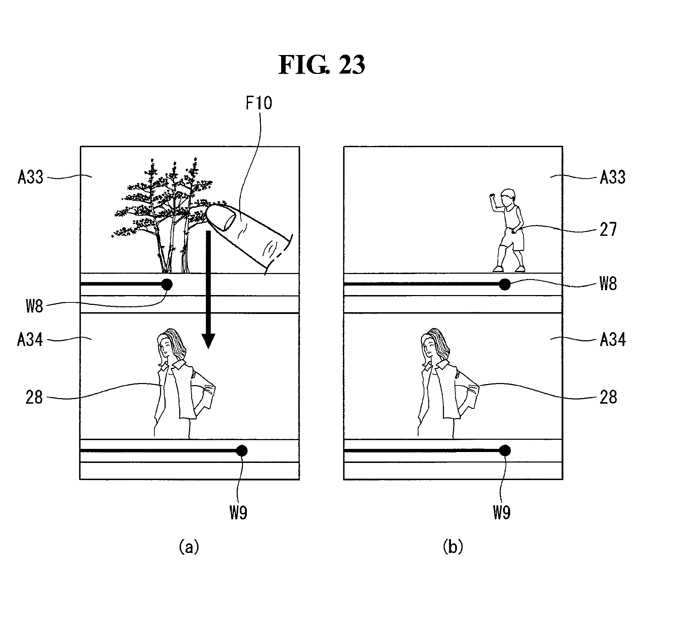

FIG. 23 is a diagram showing an example in which when moving images in different directions are played at the same time, the moving images are synchronized on the basis of a play location of a moving image in any one direction.

As shown in FIG. 23(a), the controller 180 can play moving images having different time zones in a region A33 and a region A34, respectively, at the same time. The controller 180 can make a play location of the region A33 identical with a play location of the region A34 in response to a signal, such as a drag & drop, from the region A33 to the region A34 through a finger F10 or the like.

In another embodiment, the controller 180 can make a play location of the region A34 identical with a play location of the region A33 in response to a signal, such as a drag & drop, from the region A34 to the region A33 through a finger or the like.

When moving images having different time zones are played in respective partitioned regions, the controller 180 can synchronize the time zones of the moving images in response to a signal, such as a drag & drop, form one region to the other region.

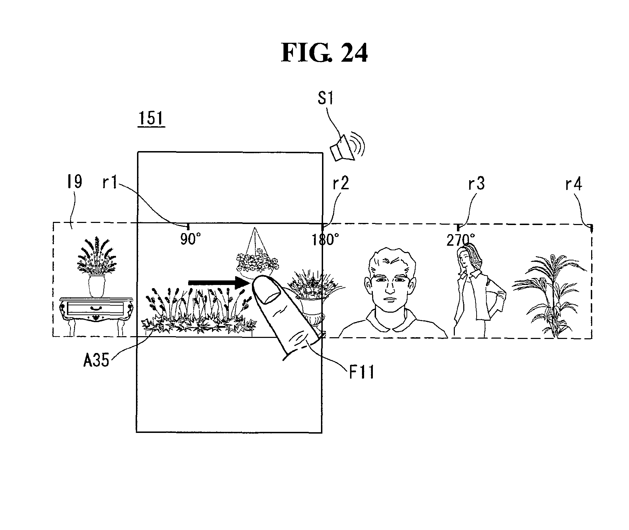

FIG. 24 is a diagram showing an example in which an image is displayed while moving the image on the display 151.

As shown in FIG. 24, the controller 180 can move a portion of a 360-degree rectangular image that is being displayed on the display 151. That is, the controller 180 can move an image I9 left and right in response to a signal, such as a touch & drag for the image I9, through a finger F11 or the like.

As the image I9 being displayed on the display 151 is moving, the controller 180 can generate signals, such as vibration and sound S1, so that a user can recognize the moving image at specific angles r1, r2, r3, and r4.

A user can intuitively recognize the moving range of the image through the signals, such as vibration and sound S1, while moving the image.

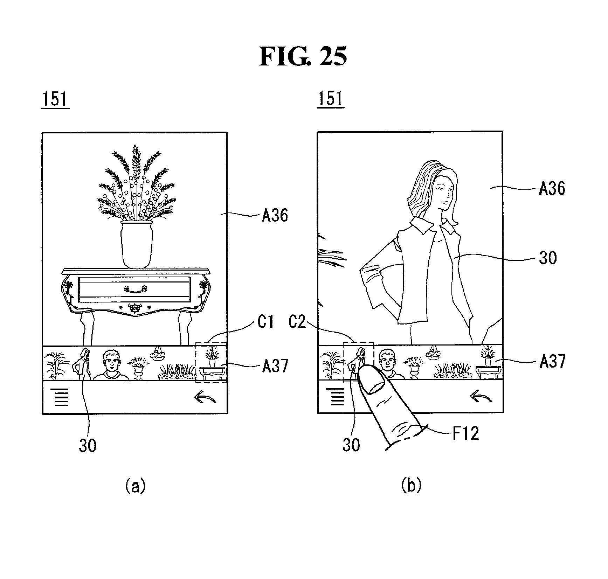

FIG. 25 is a diagram showing an example of the display 151 in which one region of an image is enlarged and displayed.

The controller 180 can edit and display at least some region of a rectangular image using one of enlargement edition, reduction edition, and partition edition methods so that the at least some region corresponds to a display region of the display 151.

The controller 180 can edit at least part of a rectangular image on the basis of a predetermined criterion or in response to a specific selection signal. That is, the controller 180 can automatically edit at least part of a rectangular image on the basis of a predetermined criterion or can manually edit at least part of a rectangular image in response to a specific selection signal.

For example, the controller 180 can adjust the size of an image based on at least one of the length and breadth of a display region of the display 151 and display an adjusted image on the display 151. The controller 180 can adjust the size of an image in response to a specific selection signal, such as a touch, a touch & drag, or a tap to the display 151, and display at least part of the image on the display 151.

As shown in FIG. 25(a), the controller 180 can display an omnidirectional image A37 and an image A36 in a specific direction, that is, a partial region of the omnidirectional image A37, on the display 151. The controller 180 can display a region, corresponding to a portion of the omnidirectional image A37 that is being displayed in the region A36, in the form of a dotted box C1.

As shown in FIG. 25(b), the controller 180 can enlarge a selected portion of the omnidirectional image A37 in response to a selection signal, such as a touch to the selected portion, through a finger F12 or the like and display the enlarged portion in the region A36.

That is, a user can select a region to be selected and viewed. For example, the controller 180 can enlarge an image C2 including a person 30 in response to a selection signal for the image C2 and display the enlarged image C2 in the region A36.

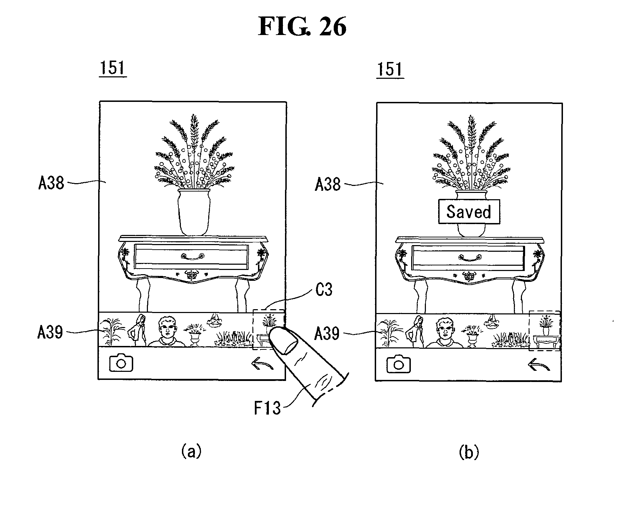

FIGs. 26 to 28 are diagrams showing an example in which one region of an image is edited, displayed, and stored.

As shown in FIG. 26, the controller 180 can select one region of an omnidirectional image and store the selected region. For example, the controller 180 can store only one region C3 of an omnidirectional image, displayed in a region A39, in response to a signal, such as a long touch to the region C3 through a finger F13 or the like.

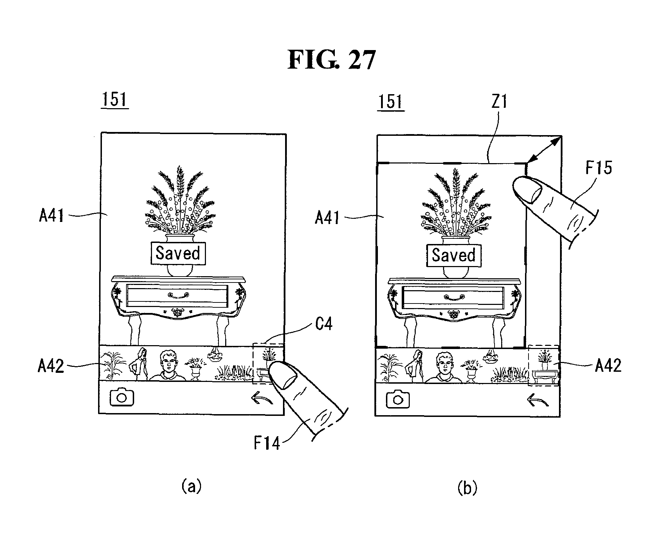

As shown in FIG. 27, the controller 180 can select and edit one region of an omnidirectional image and store the edited region.

For example, as shown in FIG. 27(a), the controller 180 can receive a signal, such as a touch to a region C4, that is, one region of an omnidirectional image A42, through a finger F14 or the like.

As shown in FIG. 27(b), the controller 180 can store only an image Z1 corresponding to some region C4 of the omnidirectional image A42 in response to a signal that adjusts the size of the omnidirectional image A42 through a finger F15 or the like.

That is, the controller 180 can store only a desired region of the entire image through processes, such as selection, enlargement, and reduction for the entire image.

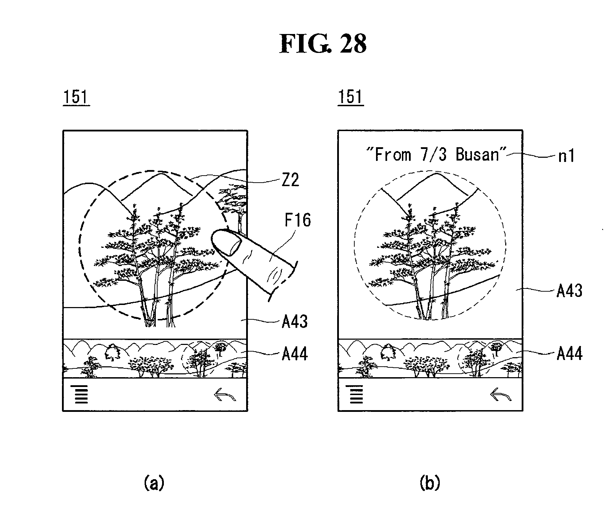

As shown in FIG. 28, the controller 180 can cut only one region of an omnidirectional image and store the cut region. For example, as shown in FIG. 28(a), the controller 180 can cut only a region Z2 of an omnidirectional image in response to a signal generated by a touch to the region Z2 through a finger F16 or the like and store the cut region Z2. That is, the controller 180 can select one region of the entire image displayed in a region A44 and store the selected region.

The controller 180 can display a selected region of the entire image displayed in the region A44 in the form of a dotted line or the like so that a user can check the selected region when performing next edition.

As shown in FIG. 28(b), the controller 180 can obtain and store a message n1. That is, the mobile terminal 100 can generate, edit, and store images having various types of styles by applying an edition and memo functions to the images.

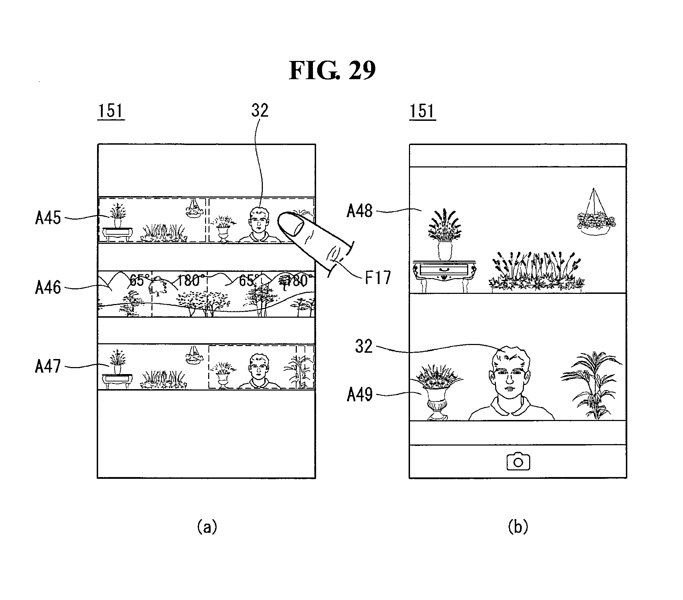

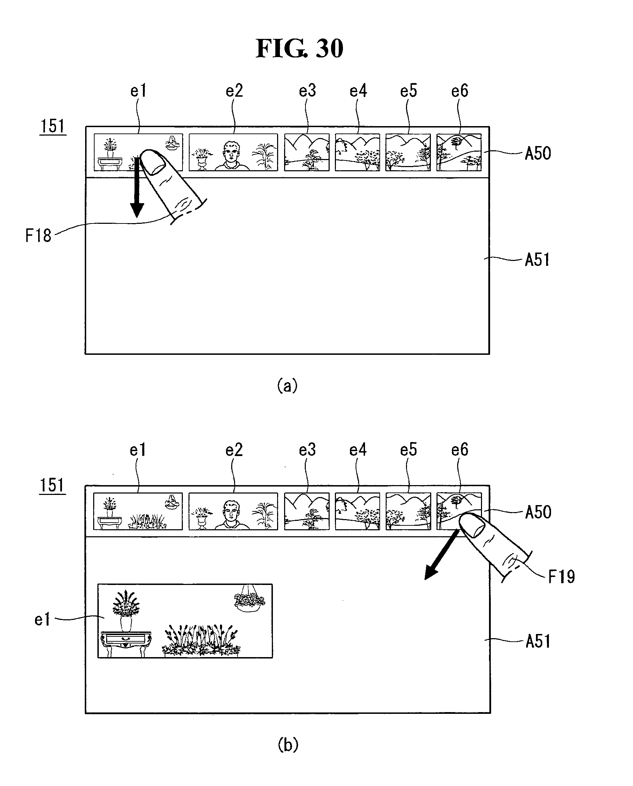

FIGs. 29 and 30 are diagrams showing an example in which a plurality of partitioned images is displayed.

As shown in FIG. 29, an omnidirectional rectangular image can be partitioned into various ratios. For example, as shown in FIG. 29(a), the controller 180 can split an image two partitions A45, four partitions A46 and so on. Furthermore, the controller 180 can split an image in a specific ratio (e.g., a length: breadth ratio 3:2, 4:3 or 16:9) on the basis of a portion where a person is placed.

The controller 180 can receive a selection signal for 2-partitioned images A45 through a signal, such as a touch, through a finger F17 or the like.

As shown in FIG. 29(b), the controller 180 can display the 2-partitioned images A45 in the regions A48 and A49 of the display 151, respectively. The controller 180 can store the 2-partitioned images. The 2-partitioned images can be results of a 360-degree image split into two on the basis of 180 degrees of the 360-degree image.

FIG. 30 is a diagram showing an example in which the controller 180 displays images partitioned in various ratios in a region A50 and edits the images.

As shown in FIG. 30(a), the controller 180 can partition an omnidirectional image into two partitions or 4 partitions. That is, the controller 180 can display partitioned images, such as two partitions e1 and e2 and four partitions e3 to e6, in the region A50. The controller 180 can select any one of the partitioned images e1, e2, and e3 to e6, in response to a signal, such as a touch & drag through a finger F18 or the like. For example, the controller 180 may select the partitioned image e1 and move the selected image e1 to a region A51 in response to a signal, such as a touch & drag.

As shown in FIG. 30(b), the controller 180 can select the partitioned image e6 in response to a signal, such as a touch & drag, through a finger F19 or the like. That is, the controller 180 can move the selected image e6 to the region A51 in response to a signal, such as a touch & drag.

The controller 180 can partition an omnidirectional image into images in various ratios and collect and combines some of the partitioned images. For example, the controller 180 can combine the image e1 and the mage e6.

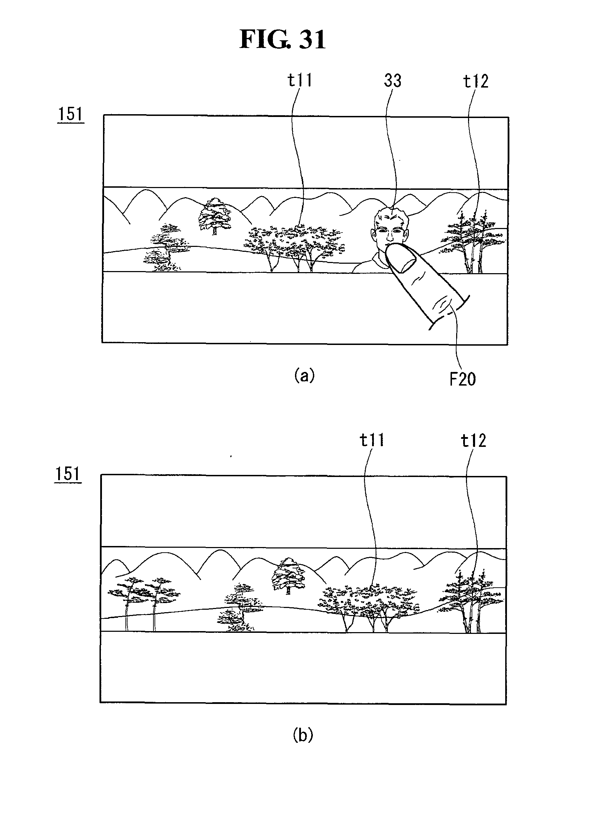

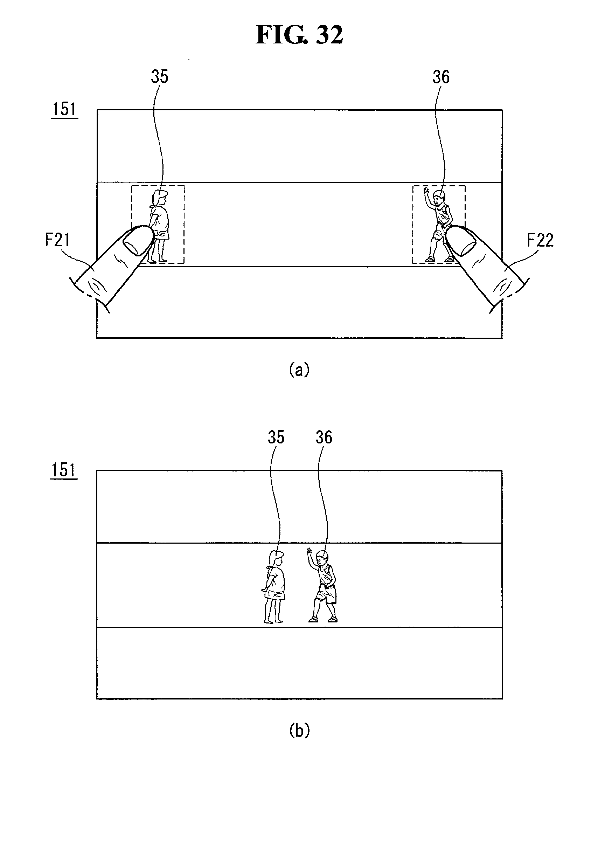

FIGs. 31 and 32 are diagrams showing an example in which an image is edited based on objects included in the image and an edited image is displayed.

As shown, the controller 180 may delete only a specific object included in an image or may select only some objects and combine the selected objects.

As shown in FIG. 31(a), a person 33 may be included in an image. The controller 180 can delete only the person 33 in response to a selection signal, such as a long touch to the person 33 through a finger F20 or the like.

As shown in FIG. 31(b), portions t11 and t12 can be arranged in parallel in the image in the state in which only the person 33 has been deleted.

If a user wants to capture a 360-degree image using the mobile terminal 100, the user may want to photograph a scene other than its own self-shot region. In this case, the controller 180 can delete and edit only the self-shot portion.

As shown in FIG. 32, the controller 180 can collect only specific objects 35 and 36 included in an image and edit the collected objects 35 and 36. That is, as shown in FIG. 32(a), the controller 180 can select the objects 35 and 36 in response to signals, such as long touches to the objects 35 and 36 through respective fingers F21 and F22 or the like.

As shown in FIG. 32(b), the controller 180 can combine the objects 35 and 36 into one image and store the one image.

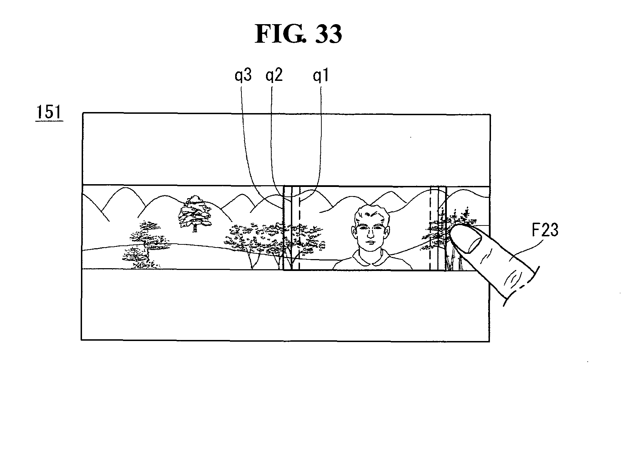

FIG. 33 is a diagram showing an example in which the length and breadth width of an image is adjusted in a specific ratio.

As shown in FIG. 33, the controller 180 can edit an image in a variety of length and breadth ratios. For example, the controller 180 can edit an image in a variety of ratios, such as a printing photograph ratio q1 having a length and breadth ratio of 3 : 2, a digital camera photograph ratio q2 having a length and breadth ratio of 4 : 3, and a wide image ratio q3 having a length and breadth ratio of 16 : 9 ratio. The controller 180 can edit an image in various ratios in response to a signal, such as a touch through a finger F23 or the like.

The controller 180 can store only an image part cut in a selected ratio as one image file.

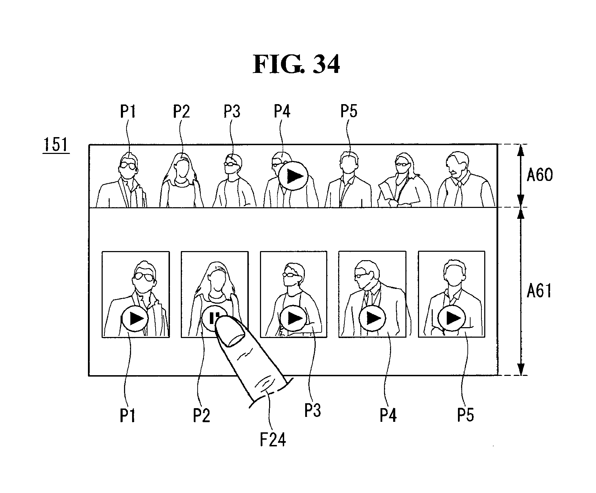

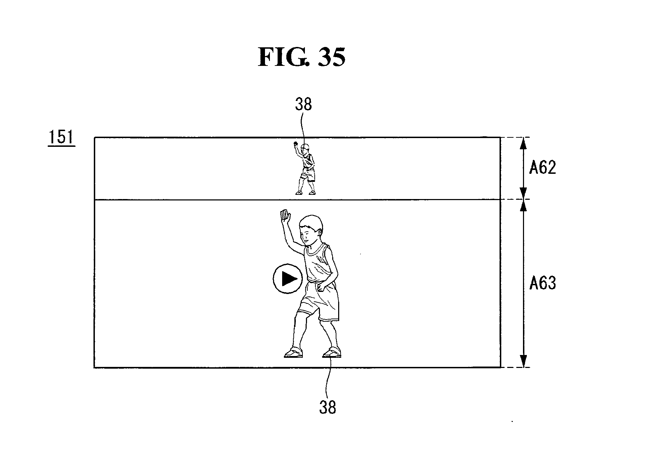

FIGs. 34 and 35 are diagrams showing an example in which objects included in an image are separated from the image and displayed.

As shown in FIG. 34, a plurality of objects can be included in an image. The controller 180 can separate the plurality of objects from the image and display the separated objects on the display 151.

For example, if a scene in which several persons are having a conference in a conference room is sought to be captured by the omnidirectional camera in the form of a moving image, the controller 180 can edit the captured moving image for each object, that is, for each person. That is, the controller 180 can separate images, including respective objects P1, P2, P3, P4, and P5, from the entire image and store the separate images.

The controller 180 can play only a desired object image, from among the object images P1 to P5. For example, the controller 180 can play only the object image P2 in response to a signal, such as a touch to the object image P2 through a finger F24 or the like.

The controller 180 can display all the moving images in one region A60 of the display 151. The controller 180 can display moving images, separated for each object, in the other region A61 of the display 151.

FIG. 35 is a diagram showing an example in which edition is performed based on a moving object included in an image when the object moves.

As shown in FIG. 35, the controller 180 can display all moving images in one region A62 of the display 151. If an object, that is, a person 38, included in the one region A62 moves, the controller 180 can display a screen edited based on the person 38 in the other region A63 of the display 151.

FIG. 36 is a plan view showing the structure of the omnidirectional camera 200.

As shown in FIG. 36(a), the omnidirectional camera 200 in accordance with an embodiment of the present invention can be provided on one side of the mobile terminal. FIG. 36(b) is a plan view of the mobile terminal 100 and is an exploded cross-sectional view of a portion of the omnidirectional camera 200.

The omnidirectional camera 200 can include a combination of a convex lens (201) portion and a concave lens (202) portion. An opaque cover 203 can be disposed at the upper part of the concave lens (201) part at the center of the omnidirectional camera 200.

Since the small-sized omnidirectional camera 200 is embedded in the mobile terminal 100, inconvenience due to the attachment and detachment of an additional omnidirectional camera can be avoided.

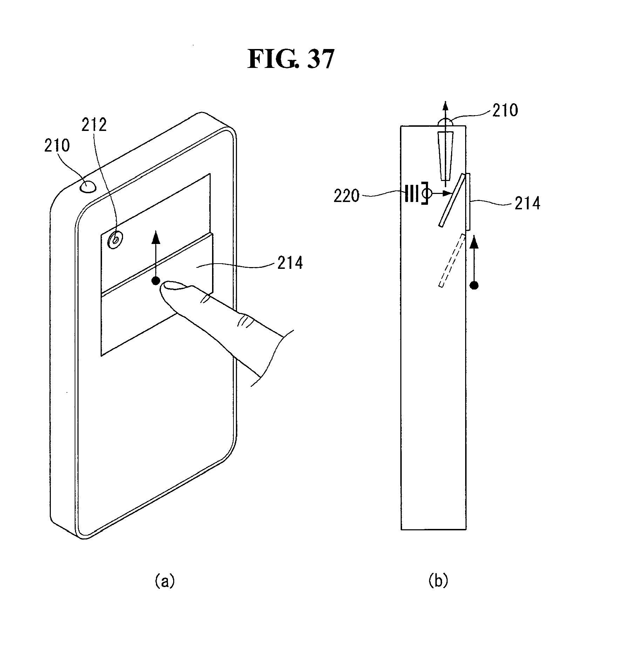

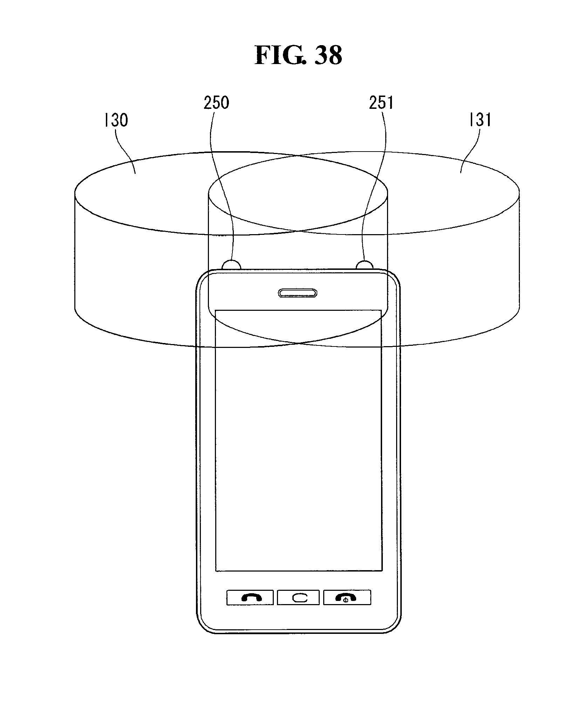

FIGs. 37 and 38 are diagrams showing the structure of a camera in accordance with another embodiment of the present invention.

As shown in FIG. 37, in another embodiment of the present invention, one camera module 220 can perform both the functions of an omnidirectional camera and a one-directional camera. That is, when a lens 212 is covered by lifting a cover 214 up, the camera module 220 can operate through an interaction with a lens 210 placed at the upper part of the mobile terminal 100. That is, the camera module 220 can operate as an omnidirectional camera.

When the cover 214 is lifted down and thus the lens 212 is not covered, the camera module 220 can operate through an interaction with the lens 212 placed in the rear of the mobile terminal 100. That is, the camera module 220 can operate as a camera for performing one-directional photographing.

As shown in FIG. 38, in yet another embodiment of the present invention, the mobile terminal 100 can include two cameras. That is, an image having high-picture quality can be obtained by overlapping images I30 and I31 captured by respective omnidirectional cameras 250 and 251.

The mobile terminal and the method of controlling the same in accordance with the present invention have the following advantages.

In accordance with the present invention, an omnidirectional still or moving image can be captured by the omnidirectional camera embedded in the mobile terminal, and an interface that can be conveniently used by a user can be implemented. Furthermore, in accordance with the present invention, a ring-shaped image captured by the omnidirectional camera can be converted into a rectangular image and displayed on the display.

Furthermore, in accordance with the present invention, an object(s) included in an image can be separated from the entire image and displayed.

Furthermore, in accordance with the present invention, images edited for each object included in the entire image can be displayed at the same time.

The above-described method of controlling the mobile terminal may be written as computer programs and may be implemented in digital microprocessors that execute the programs using a computer-readable recording medium. The method of controlling the mobile terminal may be executed through software. The software may include code segments that perform required tasks. Programs or code segments may also be stored in a processor-readable medium or may be transmitted according to a computer data signal combined with a carrier through a transmission medium or communication network.

The computer-readable recording medium may be any data storage device that can store data readable by a computer system. Examples of the computer-readable recording medium may include read-only memory (ROM), random-access memory (RAM), CD-ROMs, DVD±ROM, DVD-RAM, magnetic tapes, floppy disks, and optical data storage devices. The computer-readable recording medium may also be distributed over computer systems coupled over a network so that computer-readable codes are stored and executed in a distribution fashion.

The mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method of controlling the mobile terminal may include displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100), comprising:
a display (151);
a first camera (200) configured to perform omnidirectional photographing; and
a controller (180) configured to convert at least some region of a ring-shaped image, captured by the first camera, into a rectangular image and display the rectangular image on the display.

2. The mobile terminal (100) of claim 1,
further comprising a second camera configured to perform one-directional photographing, wherein the controller (180) controls at least one of the first camera and the second camera so that the at least one camera operates in any one of a first mode in which the first camera operates and a second mode in which the first and the second cameras operate.

3. The mobile terminal (100) as claimed in any one of the preceding claims,
wherein when the at least one camera operates in the second mode, the controller (180) displays an indicator, indicating a location of a region corresponding to a second image captured by the second camera, in a first image captured by the first camera.

4. The mobile terminal (100) as claimed in any one of the preceding claims,
wherein the controller (180) displays at least one of the first image and the second image on the display.

5. The mobile terminal (100) as claimed in any one of the preceding claims,
wherein the controller (180) edits at least part of the rectangular image using at least one of enlargement edition, reduction edition, and partition edition methods and displays the edited at least part on the display so that the edited at least part corresponding to a region of the display.

6. The mobile terminal (100) as claimed in any one of the preceding claims,
wherein the controller (180) displays an indicator indicative of a location of the at least some region of the rectangular image displayed on the display.

7. The mobile terminal (100) as claimed in any one of the preceding claims,
wherein the controller (180) edits the at least part of the rectangular image based on a predetermined criterion or in response to a specific selection signal.

8. The mobile terminal (100) as claimed in any one of the preceding claims,
wherein the controller (180) corrects a distortion of objects included in the rectangular image and displays corrected objects on the display.

9. The mobile terminal (100) as claimed in any one of the preceding claims,
wherein the controller (180) partitions the rectangular image into a plurality of partitioned images and displays the plurality of partitioned images on the display.

10. The mobile terminal (100) as claimed in any one of the preceding claims,
wherein:
the rectangular image comprises at least one object, and
the controller (180) separates the at least one object from the rectangular image and displays the separated at least one object on the display.

11. A method of controlling a mobile terminal (100), comprising:
performing omnidirectional photographing;
converting at least some region of a captured ring-shaped image into a rectangular image; and
displaying the rectangular image.

12. The method of claim 11,
wherein displaying the rectangular image comprises editing at least part of the rectangular image using at least one of enlargement edition, reduction edition, and partition edition methods and displaying the edited at least part.

13. The method as claimed in any one of claims 11 to 12,
wherein displaying the rectangular image comprises displaying an indicator indicative of a location of the at least some region of the rectangular image.

14. The method as claimed in any one of claims 11 to 13,
wherein displaying the rectangular image comprises correcting a distortion of objects included in the rectangular image and displaying corrected objects.

15. The method as claimed in any one of claims 11 to 14, wherein:
the rectangular image comprises at least one object, and
displaying the rectangular image comprises separating the at least one object from the rectangular image and displaying the separated at least one object.
